# EUROPEAN PATENT APPLICATION

(11) **EP 2 189 731 A1**
(43) Date of publication of application: **26.05.2010**
(21) Application number: 09176787.1
(22) Date of filing: 23.11.2009
(51) Int. Cl.: F24F 5/00, F24J 3/08

(54) **Geothermal probe**

(30) Priority: 21.11.2008 IT MI20082077
(71) Applicant: Baioni, Fabio, 26900 Lodi (IT)
(72) Inventor: Baioni, Fabio, 26900 Lodi (IT)
(74) Representative: Cicogna, Franco

(57) **Abstract**

An improved geothermal probe, **characterized in that** said geothermal probe comprises an outer exchanger tube in which are arranged a downward directed conveying tube and an upward directed conveying tube, said downward directed and upward directed tubes being connected to a radiating assembly, said outer exchanger tube being driven, at least partially, in a stratum, said downward directed conveying tube extending up to a proximity of a bottom of said outer exchanger tube, said upward directed conveying tube extending only up to a top portion of said outer exchanger tube, in said tubes being conveyed a fluid which is driven by natural convection through a closed circuit, thereby transferring heat from said stratum to said radiating assembly.

## Description

### BACKGROUND OF THE INVENTION

The present invention relates to an improved geothermal probe.

Geothermal energy is a form of renewable energy deriving from heat present in the deepest strata of the Earth Crust.

In fact, by proceeding inward from the earth surface, the earth temperature gradually increases by about 30°C per km through the crust (0.3°C/km and 0.8°C/km respectively in the earth mantle and core).

The reservoirs of the above thermal energy, however, are dispersed and arranged at such a high depth that it is not possible to exploit them.

To extract or win and use the earth heat, it would be necessary to locate earth heat concentrating regions, the so-called geothermal tank or reservoir.

While several geothermal systems already exist, at present only hydrothermal systems are industrially exploited, consisting of water permeable rock formations, thereinto rain and river water penetrates and is heated by high temperature rock layers, the achieved temperature varying from 50-60°C to several hundreds degrees.

In actual practice, geothermal energy represents at present an amount less than 1% of the worldwide energy production.

Also known is the fact that some earth regions may present an underground temperature higher than an average temperature value, which phenomenon is due to volcanic or tectonics effects.

In these "hot" regions, energy may be easily recovered through geothermal systems, in particular by using geothermal probes.

### SUMMARY OF THE INVENTION

Accordingly, the aim of the present invention is to provide a geothermal probe which is improved with respect to prior ones.

Within the scope of the above mentioned aim, a main object of the invention is to provide such a geothermal probe allowing to optimize the thermal exchange and providing an improved thermal exchange efficiency.

Yet another object of the present invention is to provide such a geothermal probe having a larger surface and a less thermal exchange rate, than conventional like diameter geothermal probes comprising one or two downward directed tubes and corresponding upright directed tubes.

Another object of the present invention is to provide such a geothermal probe which can be installed in a simplified and less expensive manner.

Another object of the present invention is to provide such a geothermal probe which can be made starting from inexpensive materials, shorter conveying tubes and simpler machining operations.

Another object of the present invention is to provide such a geothermal probe which, the thermal efficiency being the same, can be installed at an installing cost much less than that of conventional probes.

Yet another object of the present invention is to provide such a geothermal probe which, owing to its specifically designed constructional features, is very reliable and safe in operation.

According to one aspect of the present invention, the above mentioned aim and objects, as well as yet other objects, which will become more apparent hereinafter, are achieved by an improved geothermal probe, **characterized in that** said geothermal probe comprises an outer exchanger tube in which a downward directed conveying tube and an upward directed conveying tube are arranged, said conveying tubes being coupled to a radiating assembly, said outer exchanger tube being introduced, at least partially, into a stratum, said downward directed conveying tube extending up to a region near a bottom of said outer exchanger tube, said upward directed conveying tube extending only up to a top portion of said outer exchanger tube, a fluid being conveyed in said tubes, said fluid being driven by natural convection and/or by a closed loop circuit pump, so as to transfer heat between said stratum and radiating assembly.

The improved geothermal probe according to the invention may also comprise a forced circulation pump.

Said probe can also be used for refrigerating an environmental radiating element, the refrigerating circulation being performed in a direction opposite to the natural convection heating direction.

By said pump, said fluid is driven to forcibly circulate in the closed loop circuit, while transferring heat from said radiating assembly to said stratum.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a diagrammatic side elevation view of the improved geothermal probe according to the present invention;

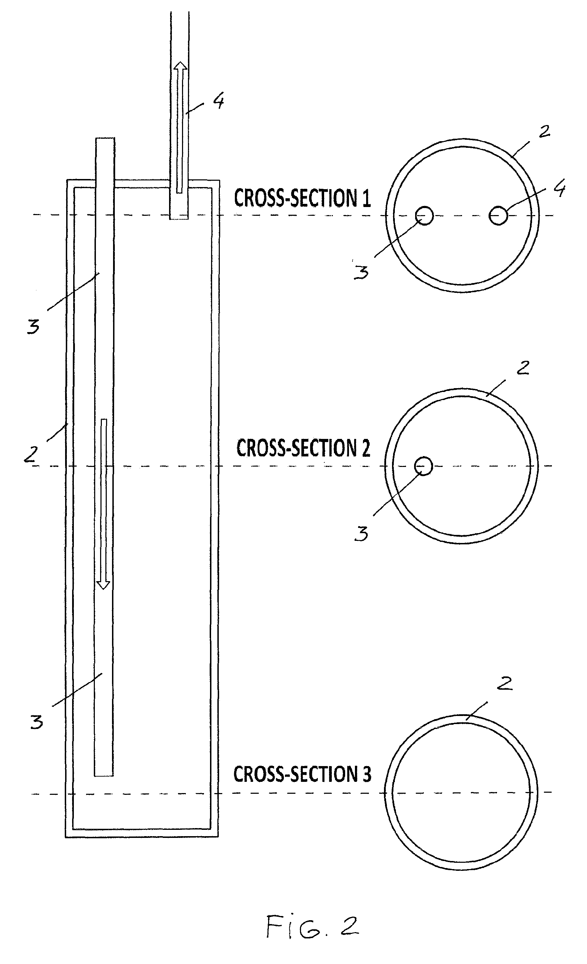

Figure 2 shows three schematic cross-sections taken at three different heights, of the geothermal probe shown in figure 1;
Figure 3 is a further diagrammatic side elevation view of the improved geothermal probe according to the further aspect of the present invention;
Figure 4 shows a modified embodiment of the improved geothermal probe, provided for operating in a middle enthalpy application, as driven by a driving turbine;
Figure 5 shows an outer exchanger tube including a plurality of longitudinal corrugations, designed for favoring a convective circulation of a fluid outside the exchanger.

### DESCRIPTION OF THE PREFERRED EMBODIMENTS

With reference to the number references of the above mentioned figures, the improved geothermal probe according to the invention, which has been generally indicated by the reference number 1, comprises an outer exchanger tube 2, therein are arranged a downward directed conveying tube 3 and a upward directed conveying tube 4. Said upward and downward directed tubes being in turn connected to a "user or consumer device" including, for example, a radiating assembly (in low enthalpy applications) or a turbine (in middle enthalpy applications).

The downward directed conveying tube 3 is extended up a proximity of the bottom of the outer exchanger tube 2, whereas the upward directed conveying tube 4 is extended only up to the top portion of the outer exchanger tube 2.

Within said downward directed conveying tube 3 a downward directed fluid flow, having a less temperature and accordingly a higher density, is conveyed.

In said upward directed conveying tube 4, said fluid is driven within a closed loop circuit, thereby transferring heat from the stratum to the user or consumer device.

In said tubes a fluid 6 is conveyed which may comprise water and optional additive substances, or any other fluid having a low boiling point, which is driven by natural convection through said closed loop circuit, while transferring heat from the stratum 7 to the radiating assembly 5.

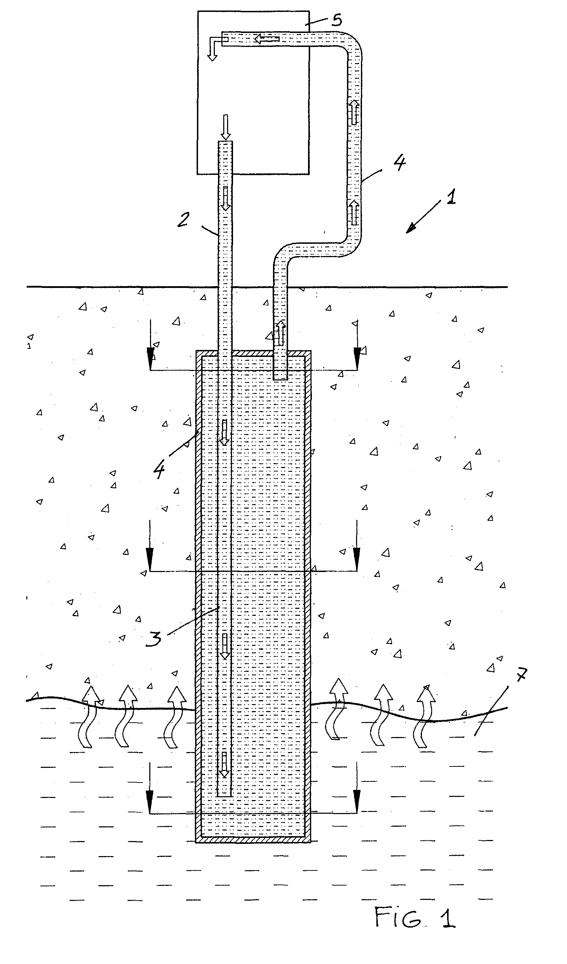

Figure 1 shows a possible application example, of a full natural circulation type, of the improved geothermal probe according to the present invention.

Between several possible applications of the subject probes, are herein mentioned environmental heating and demoistening applications, with the probe in a thermal stratum, and an elimination of condensate and winter frozen material, for example for holiday houses, with the probe being driven into the underground.

In said probe, said fluid is driven inside said close loop circuit, while transferring heat from the stratum to the consumer device.

A further aspect to be considered, in particular in full natural circulation applications, is the designing of the size and length of the probe, to be made depending on the thermal gradient through the exchange environment.

In fact, it has been found in experimental tests that, as a limit case, in the presence of high temperature only at the low or bottom part of an exchanger, the latter will dissipate heat through the overall remaining surface.

Accordingly, the fluid heat will be concentrated at the bottom portion and toward the center of the exchanger cross-section, thereby causing the fluid to be raised again from the "downward directed" tube: in this case, the probe would operate in a reverse direction.

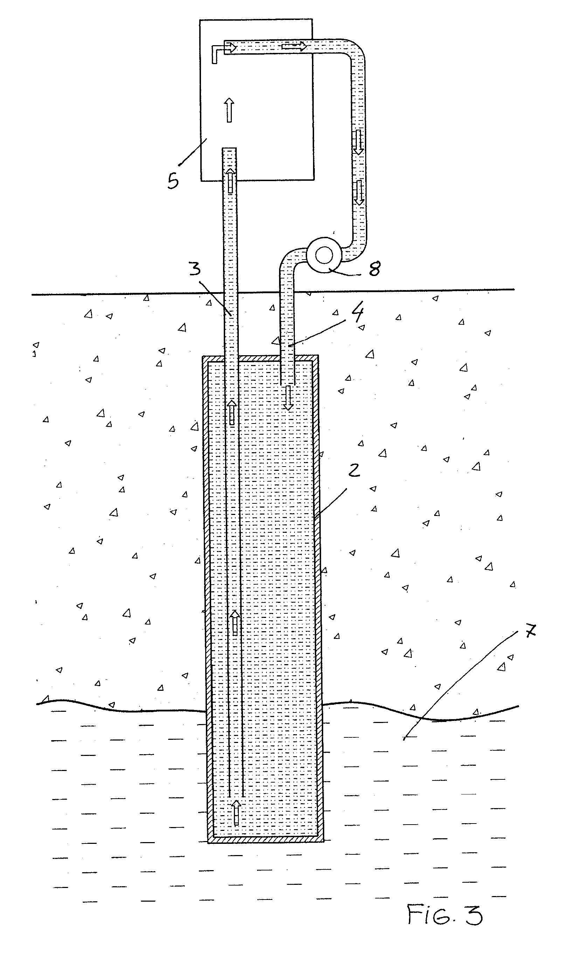

Figure 3 shows an application example of a forced circulation type, in which a circulating pump 8 is used.

The example shown in figure is suitable for applications with a heat pump (a cold/hot heat pump), and for refrigerating either table or bed water or current water.

The latter exemplary embodiment is adapted to advantageously replace conventional geothermal collectors or manifolds, if horizontally arranged, owing to the fact that the probe may be installed in a much more simple and in a less offset manner.

Even in a case of a forced circulation application, the fluid rate in said exchanger will be much lower than that through the inlet and outlet tubes.

Accordingly, the exchanger convective flow could be used for optimizing the thermal exchange depending on the desired or target results.

For example, if a radiating assembly applied to a ceiling of an environment must be refrigerated, then the circulation will occur in a direction opposite to that for providing a natural convection heating operation, as is shown in figure 3.

In this case, the fluid (water with an optional additive substance) will be driven under forced circulation within said closed loop circuit, while transferring heat from the radiating assembly 5 to the stratum 7.

The improved geothermal probe according to the present invention provides several great advantages.

In fact, it allows to optimize the thermal exchange and accordingly to provide a much more efficient system.

The circulation rate in the exchanger tube, for a natural circulation application, is of a self-adjusting type depending on the temperature difference.

The fluid rate in the tubes will change as a reverse squared function of the respective cross-section radius.

Moreover, the exchanger fluid will be driven at a less rate and a larger exchange surface, whereas in the up and down tubes the rate will increase and the exchange surface decrease.

This would provide an improved exchange efficiency, while reducing the fluid conveying dispersions.

Furthermore, the geothermal probe according to the present invention is characterized by a larger surface and a less exchange rate than those of like outer diameter conventional probes, including either one or two downward directed tubes and corresponding upward directed tubes.

Yet another advantage of the geothermal probe according to the present invention is that it can be installed by a very simple installing method, and with a consequent very reduced installing cost.

Moreover, if the temperature difference is sufficient and if the hydraulic circuit has a suitable slope, without "siphons", then it is not necessary to provide a circulating pump.

Moreover, even if the circulating circuit pattern prevents from operating under natural convection conditions, the load losses would be anyhow less than those of a conventional geothermal probe.

A further advantage of the geothermal probe according to the present invention is that it requires a less fluid circulating power.

In fact, the probe tube head portion does not include bent portions, thereby it is possible to use herein inexpensive materials, shorter convective tubes and much more simple machining operations.

Furthermore, the probe according to the present invention may be installed at a very low cost, the thermal efficiency being the same, since it comprises thinner probe elements which can be driven to a less depth while assuring the same thermal exchange as those of a conventional probe.

Moreover, in the improved probe according to the present invention the fluid flow rate in the tubes changes in a reverse relationship with respect to the respective cross-sections. The following Table represents an example of this aspect.

### GEOTHERMAL PROBE

### Advantages

### The fluid flow-rate in the tubes changes reversely of the respective cross-sections

| **Pantelleria geothermal probe** | **Outer diameter** | **Inner diameter** | **Outer cross-section** | **Inner cross-section** | **Net cross-section** |
|---|---|---|---|---|---|
| Exchanger tube | 50.00 | 47.50 | 1962.50 | 1771.16 | 1692.66 |
| Convective tube outer diameter | 10.00 | 9.00 | 78.50 | 63.59 | 63.59 |
| Circulating rate (m/sec) | 0.04 | 1.00 | | | |
| **Circulating rate ratio** | **26.62** | | | | |
| Conveying tube flow-rate | | | | | |
| Circulating rate (m/sec) | 1 | | | | |
| Outlet tube cross-section (cm²) | 63.59 | | | | |
| **Flow-rate /liters/second)** | **6.36** | | | | |

Thus, the improved geothermal probe according to the present invention provides a heat exchanger with a low circulation rate and a very large thermal exchange surface.

On the contrary, in the upward directed and downward directed tubes, the fluid will be driven with a high circulating rate, said tubes providing a small surface.

Accordingly, the inventive probe provides a greater exchange efficiency at the exchanger and a less thermal dispersion in the upward and downward directed tubes.

In the case of the improved geothermal probe shown in figure 1, the heat is brought to the surface by a natural convective effect.

If the temperature difference is sufficient and if the hydraulic circuit has a suitable configuration, then it is not necessary to provide a circulating pump.

If the configuration of the circuit and the required flow rate do not allow to operate in a natural convective conditions, the load losses would be anyhow less than those of conventional geothermal probes.

In the case of the improved probe shown in figure 1, it has a very simple construction and can be made in a very easy manner with a less installation cost, the thermal efficiency being the same (thinner probe elements and/or less depths required for providing the same thermal exchange, with respect to conventional probes).

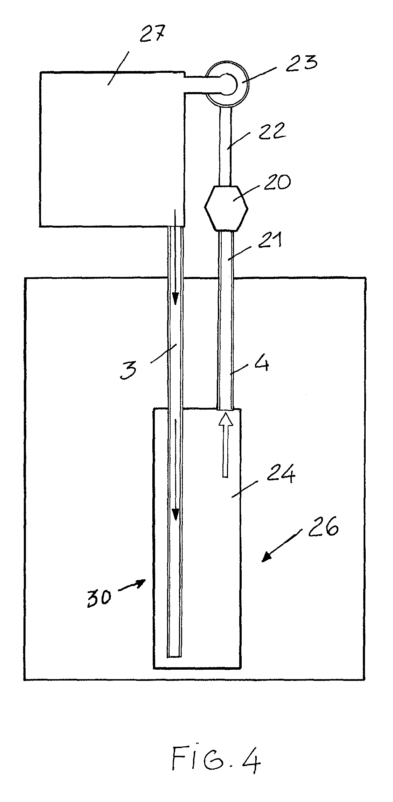

Figure 4 shows a possible application of the exchanger in a generating energy system operating based on a Rankine cycle.

In the exchanger 30, the conveying fluid is heated and upward directed through the upward duct 4, thereby, after having achieved a level (the tube portion 21) thereat the fluid pressure and temperature correspond to the fluid boiling point, it will pass by depression from the liquid phase to the gaseous phase and the generated steam, after having passed through the flow rate meter 20 (designed for allowing the system to continuously operate) is conveyed through the duct 22 to the turbine 23 whereat it is expanded and nebulized in the condenser 27 and brought again to its liquid phase to move downward under gravity from the condenser 27 into the downward directed tube 3, where it will be pressed by the overlying liquid column to reach again the exchanger improved geothermal probe 30, where the cycle will be started again, which cycle corresponds to a Rankine's thermodynamic cycle.

The job of generating driving power is performed by the turbine to which an electric generator can be axially connected.

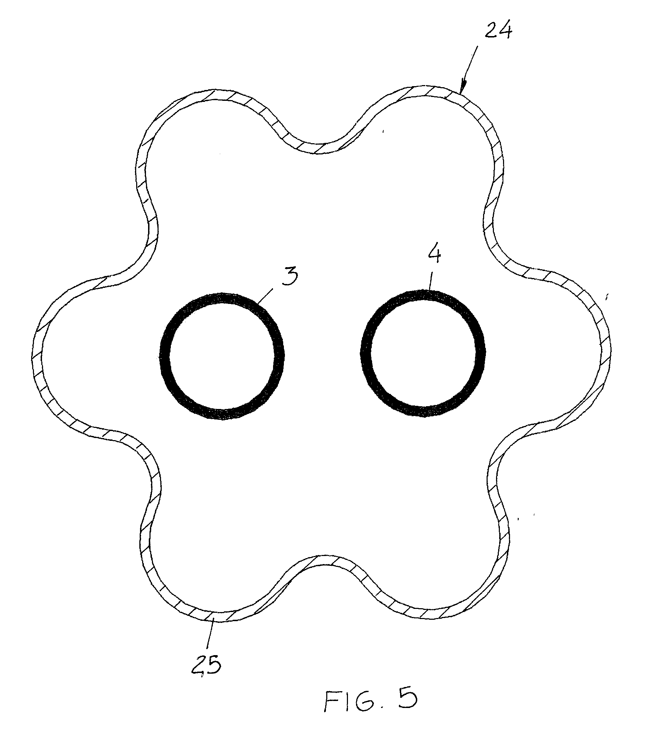

Figure 5 shows an outer tubular element 24 provided with a plurality of outer longitudinal corrugations 25 operating to allow the stratum fluids, either liquid or gaseous, to circulate by convection outside the exchanger 30 in said corrugations 25, thereby providing convective stratum fluid currents.

Thus, heat is transmitted to the exchanger 30 with a highly efficient thermodynamic cycle.

In this connection it should be apparent that the exchanger 30 can be made of several materials, for example structural ceramics material, glass, metal or any other suitable materials, depending on the physical-chemical features of the stratum and use or application type.

With respect to the conveying fluid, it is possible to use different characteristic fluids based on the stratum temperature, consumer or user device temperature and application type. For example, it would be possible to use distilled or demineralized water for low enthalpy applications, such as live environment heating and refrigerating applications, water or low-boiling fluid for Rankine's cycle applications, as well as diathermal oil or rectified oil or other suitable fluids providing an efficient thermal exchange without phase changes in a heat radiating consumer or user assembly.

## Claims

1. An improved geothermal probe, **characterized in that** said geothermal probe comprises an outer exchanger tube in which are arranged a downward directed conveying tube and an upward directed conveying tube, said downward directed and upward directed tubes being connected to a radiating assembly, said outer exchanger tube being driven, at least partially, in a stratum, said downward directed conveying tube extending up to a proximity of a bottom of said outer exchanger tube, said upward directed conveying tube extending only up to a top portion of said outer exchanger tube, in said tubes being conveyed a fluid which is driven by natural convection through a closed circuit, thereby transferring heat from said stratum to said radiating assembly.

2. An improved geothermal probe, according to claim 1, **characterized in that** said geothermal probe is adapted to be used for heating and demoistening environments, with the probe in a thermal stratum, and for eliminating condensate and winter frozen materials, with said probe in an underground position.

3. An improved geothermal probe, according to claim 1, **characterized in that** said geothermal probe has such a size and length based on a thermal gradient in the thermal exchange environment.

4. An improved geothermal probe, according to claim 1, **characterized in that** said geothermal probe comprises a circulating pump for forcibly circulating said fluid.

5. An improved geothermal probe, according to claim 1, **characterized in that** said geothermal probe is adapted to be used in heat pump (heating/refrigerating pump) applications and for refrigerating either bed water or current water.

6. An improved geothermal probe, according to claim 1, **characterized in that** said probe is adapted to be used, in a horizontal arrangement, for replacing conventional geothermal manifolds.

7. An improved geothermal probe, according to claim 1, **characterized in that** said fluid is conveyed in said exchanger with a conveying rate smaller than that of inlet and outlet fluid tubes, thereby generating convective fluid flows adapted to optimize a target thermal exchange.

8. An improved geothermal probe, according to claim 1, **characterized in that** said geothermal probe is adapted to be used for refrigerating an environmental radiating assembly, by a fluid circulation in a direction opposite to that of a natural convection heating circulation, said fluid being forcibly circulated in a closed circuit while transferring heat from said radiating assembly to said stratum.

9. An improved geothermal probe, according to claim 1, **characterized in that** said fluid is circulated in said exchanger tube, in a natural circulation case, so as to self-adjust depending on a temperature difference.

10. An improved geothermal probe, **characterized in that** said geothermal probe comprises an exchanger adapted to be used in a Rankine cycle energy generating system, and that said fluid is heated and conveyed through said upward directed tube (4) and upon arriving at a level (tube portion 21) thereat the fluid pressure and temperature correspond to the fluid boiling point, being changed by negative pressure from a liquid phase to a gaseous phase thereof, thereby the generated fluid steam, after having passed through a fluid flow-rate meter (20), adapted to allow the system to continuously operate, being conveyed, by a tube or duct (22), to a turbine (23) where said fluid is expanded and nebulized in a condenser (27) and being then brought again to a liquid phase downward directed by gravity from said condenser into said downward directed duct or tube (3), where it is compressed by an overlying liquid column thereby arriving again at said exchanger geothermal probe (30), where the operating cycle is restarted, driving power being generated by said turbine (23) to which an electric generator is axially connected.

11. An improved geothermal probe, according to the preceding claim, **characterized in that** said geothermal probe comprises an exchanger, including an outer tubular element (24) provided with outer longitudinal corrugations (25) allowing the stratum liquid and gas fluids to circulate by convection outside said exchanger (30), thereby providing stratum fluid convective currents or streams.

12. An improved geothermal probe, according to the preceding claims, **characterized in that** said probe conveys to said exchanger (30) also convective heat and not only conductive heat, thereby providing an improved efficiency thermodynamic cycle.

13. An improved geothermal probe, according to one or more of the preceding claims, **characterized in that** said exchanger (30) is made of structural ceramics, glass, metal or other suitable materials depending on physical-chemical characteristics of said stratum and on a use application.

14. An improved geothermal probe, according to one or more of the preceding claims, **characterized in that** in said probes are used fluids having different characteristics based on a stratum temperature, a consumer or user device type and temperature, and an application type, said fluids comprising either distilled or demineralized water for low enthalpy (live environment heating and refrigerating) applications, water or low boiling fluids for Rankine cycle applications or a diathermal oil, rectified oil or other fluids suitable to provide an efficient thermal exchange without phase changes in a radiating consumer assembly.
